(19) Europäisches Patentamt
European Patent Office
Office européen des brevets

(11) **EP 4 073 913 B1**

(12) **EUROPEAN PATENT SPECIFICATION**

(45) Date of publication and mention
of the grant of the patent:
**20.12.2023 Bulletin 2023/51**

(21) Application number: **20733311.3**

(22) Date of filing: **22.06.2020**

(51) International Patent Classification (IPC):
**H02K 7/18** (2006.01)    **H02K 35/02** (2006.01)

(52) Cooperative Patent Classification (CPC):
**H02K 35/02; H02K 7/1892**

(86) International application number:
**PCT/EP2020/067330**

(87) International publication number:
**WO 2021/115640 (17.06.2021 Gazette 2021/24)**

(54) **ELECTRICAL POWER GENERATOR**

STROMGENERATOR

GÉNÉRATEUR DE PUISSANCE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2019 EP 19383110**

(43) Date of publication of application:
**19.10.2022 Bulletin 2022/42**

(73) Proprietor: **Vortex Bladeless, S.L.**
**05001, Ávila (ES)**

(72) Inventor: **YÁÑEZ VILLARREAL, David Jesús**
**05003 Ávila (ES)**

(74) Representative: **Balder IP Law, S.L.**
**Paseo de la Castellana 93**
**5ª planta**
**28046 Madrid (ES)**

(56) References cited:
**WO-A1-2017/174685    JP-A- 2004 176 616**

## Description

## TECHNICAL FIELD

The invention pertains to the field of electrical power generators useful for converting movement into electrical power and energy. This kind of generators are useful in, for example, the context of renewable energies, such as in the context of electrical power generation based on oscillating movements or vibrations, such as in the context of electrical power generation based on aeroelastic resonance, such as von Karman vortices.

## BACKGROUND OF THE INVENTION

Due to the drawbacks of non-renewable energies, such as those based on the combustion of fossil fuels or nuclear energy, major efforts have been made to develop so-called renewable energies such as solar and wind power. Wind power is typically based on the generation of movement of one or more objects using the wind as the primary energy source. For example, in a horizontal axis wind turbine, a multi-blade rotor is caused to rotate and the rotary movement of the multi-blade rotor causes rotation of the rotor of a generator arranged in the so-called nacelle of the wind turbine. Rotation of the rotor of the generator induces an electromotive force and thus electrical currents in the stator windings. Many different kinds of generators have been developed for efficient conversion of rotary movement into electrical energy.

However, some systems for converting the primary energy (such as wind or wave energy) into movement of a member of the system typically produces an oscillatory rather than a rotary movement. For example, systems for power generation based on the von Karman vortices typically involve the oscillation of a member back and forth, that is, a swaying bi-directional movement. This kind of vortex based power devices are disclosed in, for example, WO-2016/055370-A2, WO-2017/174685-A1, and WO-2018/149942-A1. These documents disclose devices in which the oscillating movement of a pole is converted into electrical energy due to the movement of magnets in relation to coils. These devices, as well as many other oscillatory devices for power generation, can operate without bearings, gears and lubricants. Also, they sometimes do not require additional means for starting up the device. So-called vortex wind power devices can comprise a pole configured to deliberately transform a stationary and laminar flow of air into a turbulent flow, wherein eddies or vortices appear in a synchronised manner throughout the length of the pole. Therefore, the pole sustains two forces, namely, a drag force in the same direction as the wind and a lift force produced in a direction perpendicular to the direction of the wind, the direction of which changes sign, with a frequency that corresponds to the frequency of the appearance of new vortices and which can be calculated using the following formula:

$$F_V = \frac{S \cdot V}{d}$$

where $F_V$ is the frequency of appearance of vortices, $V$ the velocity of the air, $S$ is Strouhal's dimensionless number and $d$ the characteristic dimension of the pole, for example, in the case of a pole having a circular cross-section, the diameter of the pole. The design of the pole can be such as to favour that the vortices appear in a synchronised manner along the capturing element. Also, in order to provide for lock-in conditions, the natural frequency of oscillation of the pole is to be adapted to the wind speed. WO-2016/055370-A2, WO-2017/174685-A1 and WO-2018/149942-A1 describe systems in which this is used by taking advantage of the fact that the repulsion force between magnets varies with the distance between the magnets. Furthermore, JP 2004 176616 A discloses a generator with a coil wound around a core, wherein the core forms a gap in which a magnet can oscillate relative to the air gap magnetic flux.

In order for a device for power production to be competitive in the marketplace, the cost of the device must be reasonable in relation to the energy that it is capable of producing during a certain period of time, taking into account maintenance costs, etc. Thus, efficient use must be made of the materials involved. For example, in a generator that is based on the movement of magnets in relation to coils, one aspect to consider is the efficient use of magnets: the magnets can represent a substantial part of the costs of a generator, for example, due to the cost of the material used for manufacturing magnets, such as Neodymium (Nd).

## DESCRIPTION OF THE INVENTION

A first aspect of the invention relates to an electrical power generator comprising a first part arranged for reciprocating movement in relation to a second part.

The first part comprises at least one first annular magnet comprising a north pole end and a south pole end arranged opposite each other in an axial direction. In the present document, the expression "annular magnet" is intended to refer to a magnet or combination of magnets that is generally ring-shaped, that is, that has a generally circular layout. In some embodiments, the annular magnet is continuous, that is, the magnetic material is present throughout the 360° of the circle. In other embodiments, the annular magnet may comprise a plurality of magnets arranged one after the other in the angular direction, that is, following the circle, but spaced from each other by gaps. The reference to a "generally circular layout" refers to the fact that the layout is such that the skilled person would understand it to be substantially circular and does not rule out, for example, certain polygonal shapes, which may sometimes be preferred to fa-

ciliate the practical implementation of the system, for example, by yuxtaposition of magnets that do not necessarily feature curved shapes. In the present document, the expression "axial direction" is intended to refer to a direction parallel with the axis of the annular magnet, that is, with the central axis of the annular magnet, the axis that is surrounded by the annulus formed by the annular magnet and perpendicular to the radii of the magnet and to the planes with which the magnet is aligned. For example, if the annular magnet is aligned with a horizontal plane (so that the radii of the magnet extend in different horizontal directions), then the axis of the magnet is vertical, and the axial direction is a vertical direction.

The second part comprises a core of ferromagnetic material (such as steel (for example so-called electric steel, ferrite, etc.) which may be laminated, as known in the art for the purpose of reducing losses due to eddy currents. The core is disposed radially inside the at least one first annular magnet. The core comprises a central portion extending in the axial direction, a first radially extending portion, and a second radially extending portion. The radially extending portions extend radially from the central portion at two different axial positions, so that the radially extending portions are spaced from each other by a gap extending in the axial direction and surrounding the central portion.

The second part further comprises at least one coil wound around the central portion between the radially extending portions.

The first part is arranged displaceable in a radial direction perpendicular to the axial direction (the movement does not have to be purely in the radial direction, an axial component is not to be ruled out; for example, the movement may be pendular), so that when subjected to a repetitive oscillatory movement in the radial direction, during one cycle of the oscillatory movement:

- at one moment of the cycle, a first segment of the first annular magnet will enter the gap whereas a second segment of the first annular magnet will be displaced away from the gap, the second segment being positioned diametrically opposite the first segment, and
- at another moment of the cycle, the second segment will enter the gap, whereas the first segment will be displaced away from the gap.

When a segment of the annular magnet approaches and enters the gap, the magnetic flux between the poles of the segment will follow a path comprising the parts of the radially extending portions axially adjacent to the segment -that is, "above" and "below" it- and the parts placed radially inwards therefrom, and the central portion. The magnetic flux through the coil or coils wound around the central portion will vary as the segments approach the gap and move away from the gap. Basically, during one cycle the flux through the coil will reach two maxima and two minima, that is, the frequency of the change of the flux will be twice the frequency of the oscillatory movement, which favours the generation of power.

In the present context, the statement that a segment "enters" the gap is intended to include cases in which the segment may not enter the gap if interpreted narrowly to consist in the space strictly between the radially extending portions, but is so close to it that the magnetic field generated by the segment to a substantial extent influences the magnetic field (the magnetic flux density B) through the core and through the coil (or through at least one of the coils, if there is more than one), such as, for example, by modifying the magnitude of the magnetic field by more than 50% or by more than 100%, and/or by inverting the polarity of the magnetic field through the coil or through at least one of the coils. Also, when used in for example a von Karman vortex based wind power device, when the amplitude of the oscillations is small, the relevant segments of the first magnet may not enter the gap but just approach the gap, whereas when the amplitude increases, the segments may enter the gap. A relatively substantial production of power may take place without the segments of the first magnet physically entering the gap.

The use of a basically annular or ring-shaped layout of the magnet is advantageous in that it is symmetric with regard to the core, so that the operation and performance can be the same irrespective of the orientation of the plane (passing through the axis of symmetry) in which the oscillatory movement is taking place. For example, in the case of a von Karman vortex generator as the one WO-2018/149942-A1, the plane in which the oscillatory movement of the capturing element is taking place will depend on the direction of the movement of the fluid: it will basically be perpendicular to that direction. The use of a substantially annular first magnet allows for substantially identical performance of the generator independently of the direction in which the fluid flows (for example, the direction in which the wind blows).

The core may optionally be fully or partly laminated as known in the art for the purpose of reducing losses due to eddy currents. In some embodiments, only the radially extending portions are laminated. In other embodiments, the core is not laminated.

The term "central portion" should not be interpreted in the sense that the portion must be placed in the center of the core, such as at the central axis of the generator. Rather, it should be interpreted to imply that it is placed radially inwards with respect to a radially external perimeter of the radially extending portions, thus, leaving a gap between radially external parts of the radially extending portions.

Also, the reference to "a central portion" should not be understood to imply that there can only one single central portion. In some embodiments, the generator may include more than one central portion, such as three or more central portions each being surrounded by a respective coil. For example, a plurality of central portions may be distributed around a central axis of the generator.

In some embodiments of the invention, a second annular magnet is arranged on the first radially extending portion and a third annular magnet is arranged on the second radially extending portion, the second and third annular magnets generating a magnetic field through the central portion of the core that has a direction that is opposite to the direction of the magnetic field through the core that is generated by the first annular magnet when the first annular magnet enters the gap. The term "annular" when referring to the second and third annular magnets is to be interpreted as when referring to the first annular magnet, as explained above.

The use of a ferromagnetic core can be advantageous to route the magnetic flux through the coil, thereby maximizing the way in which movement of the first annular magnet creates electrical power due to the changes in the magnetic flux through the coil. However, a practical limitation is that ferromagnetic materials have a limited capacity of supporting magnetic flux, namely, a limited magnetic flux density typically expressed in Tesla (T). Thus, when subjected to a larger magnetic flux density, the material becomes saturated. This means that for a given core, irrespective of the flux generated by the relevant portion(s) of the first annular magnet, the flux through the core will be limited by parameters such as the dimensions of the core, the material of the core, etc. To allow for more flux, the dimensions may be increased, but this implies an increase in the amount of material, and thus a cost and weight increase.

By providing the second and third annular magnets on the radially extending portions of the core, generating a magnetic field opposite the one generated by the first annular magnet when approaching and entering the gap, the core can be pre-loaded or magnetically biased so that a larger change in the flux can be produced by the first annular magnet when entering and exiting the gap, prior to any saturation. That is, if the magnetic saturation limit of the core is X Tesla, by pre-loading the core to -X Tesla the amplitude of the change in flux produced by the first annular magnet when entering and exiting the gap can amount to 2X Tesla, without any need to increase the dimensions of the core. Additionally, as the magnetic field generated by the second annular magnet and the third annular magnet is opposite to the field generated by the first annular magnet when entering the gap -that is, basically, the north pole of one of the second and third annular magnet and the south pole of the other one of the second and third annular magnet face the north and the south pole of the first annular magnet, respectively-, the second and third annular magnets will generate a repulsion force on the first annular magnet that will have a component directed radially outwards. This can help to create an automatic adaptation of the natural frequency of oscillation of an oscillating system to wind speed, as described in for example WO-2016/055370-A2, WO-2017/174685-A1 and WO-2018/149942-A1. It can also reduce the risk of collision between moving and fixed parts of the generator or between surrounding components.

In some embodiments of the invention, the first part further comprises a first annular member and a second annular member arranged on opposite sides of the first annular magnet in the axial direction, the first annular member and the second annular member being of ferromagnetic material, for example, steel (for example so-called electric steel, ferrite, etc.) which in some embodiments is laminated, as known in the art for the purpose of reducing losses due to eddy currents. The first annular member is axially spaced from the first annular magnet so that the first radially extending portion of the core can enter a space between the first annular member and the first annular magnet when a corresponding segment of the first annular magnet approaches the core. The second annular member is axially spaced from the first annular magnet so that the second radially extending portion of the core can enter a space between the second annular member and the first annular magnet when a corresponding segment of the first annular magnet approaches the core. The term "annular" in the context of the first and second annular members is to be interpreted as explained above in relation to the first annular magnet. It has been found that the use of these annular members, the magnetic flux through the core and the change thereof can be increased for a given first annular magnet. It is believed that this may be due to the first and second annular members serving to guide the magnetic field originated by angularly adjacent portions or segments of the magnet so as to guide it through the part of the core that is most proximate the first and second annular members. In this way, not only the segment of the first annular magnet that actually is closest to the radially extending portions of the core, but also other portions -that is, angularly more remote portions- of the first annular magnet can contribute to the magnetic flux through the core, by guiding the magnetic field generated by those portions of the magnet towards the part of the core that is closest to the annular members.

In some embodiments of the invention, the first annular magnet has a first internal diameter, the first radially extending portion has a first external diameter, and the second radially extending portion has a second external diameter, the first internal diameter being larger (such as at least 10%, 25%, 50%, 75% or 100% larger) than the first external diameter and the second external diameter. The difference in diameters implies that the first annular magnet can occupy a neutral position in which it is positioned radially beyond (that is, outwards from) the radially extending portions of the core, thereby minimizing the interaction between the core and the magnetic flux from the magnet. This can have several advantages, including the fact that when starting up the generator, that is, when the oscillatory movement of the first magnet begins -and when the amplitude is still small- there will no substantial generation of power, thereby avoiding any dampening effect on the oscillatory movement in the start-up phase. For example, in the case of a von Karman vortex generator as disclosed in WO-2018/149942-A1, it may be desirable to allow the amplitude of the oscillatory movement of the pole to reach a certain amplitude before starting any substantial generation of electrical power.

The first annular magnet can basically be arranged around a cylindrical space housing the core, including its first radially extending portion and its second radially extending portion.

In some embodiments of the invention, the second external diameter is larger than the first external diameter. For example, this can be useful when the first part carries out an oscillating pendular movement, as the amplitude of said movement may be larger in correspondence with one of the radially extending portions than in correspondence with another one of the radially extending portions: the first external diameter can then correspond to a first radially extending portion which is more remote from the centerpoint of the pendular movement than the second radially extending portion.

In some embodiments of the invention, the first radially extending portion and the second radially extending portion are substantially disc-shaped, optionally with a substantially circular perimeter. The reference to a disc-shape does not imply that each radially extending portion must have a complete disc-shape without voids, etc. The radially extending portion may for example comprise a plurality of elements, for example, elements substantially shaped as segments of a circle. For example, in the case of a generator with a plurality of central portions, a substantial segment of a circle may be associated with, such as in contact with, each such central portion.

In some embodiments of the invention, the central portion has a substantially cylindrical shape. In some embodiments, the cylinder has a circular cross section. In other embodiments, the cylinder has, for example, a polygonal cross section, such as a hexagonal cross section.

In some embodiments of the invention, the generator comprises a plurality of central portions of ferromagnetic material, each central portion being surrounded by a respective coil. The central portions are arranged in parallel, for example, distributed angularly surrounding a central axis of the generator. The electrical output of the coils can be combined, for example, using a three-phase diode bridge rectifier.

Another aspect of the invention relates to a vortex based power generation device, comprising:

a capturing element having an elongated shape, the capturing element extending in a longitudinal direction between a first end of the capturing element and a second end of the capturing element, the capturing element being configured to be attached to an anchoring point and submerged in a fluid with the first end closer to the anchoring point than the second end, the capturing element being configured such that, when the fluid moves, the capturing element generates vortices in the fluid so that an oscillating lift force is generated on the capturing element, which produces an oscillating movement of the capturing element. The vortex based power generation device further comprises an electrical power generator as described above. The electrical power generator is arranged in relation to the capturing element so that an oscillating movement of the capturing element causes an oscillating movement of the first part of the electrical power generator in relation to the second part of the electrical power generator, so as to produce electrical energy. The generator described above has been found to be especially useful in the context of von Karman vortex based wind power devices, in that it is appropriate for converting an oscillating movement into electrical energy, irrespective of the plane in which the oscillating movement is taking place. Thus, the generator, due to the substantially annular shape of many of its components, can operate in the same way irrespective of the direction in which the vortex inducing fluid flows, something that can be a big advantage in the context of, for example, substantially passive vortex wind power devices. In some embodiments, the device comprises a plurality of electrical power generators according to the invention, for example, arranged one after the other in the axial direction.

In some embodiments of the invention, one of the first part and the second part of the electrical power generator is attached to the capturing element, and the other one of the first part and the second part is arranged on a support within the capturing element. The support can be fixed, and thus movement of the capturing element in relation to the support can thus induce electrical currents in the coil and thereby produce electrical energy. It may be preferred to have the second part arranged on the support, to facilitate the arrangement of the electrical conductors such as cables needed to convey the electrical energy away from the coil.

In some embodiments of the invention, the capturing element has a substantially circular cross section, or a cross section with a shape substantially as a regular polygon, with or without rounded vertices. This kind of shape can be useful to allow the device to operate substantially in the same way irrespective of the direction of the wind.

In some embodiments of the invention, the capturing element is at least partially hollow, and the electrical power generator is at least partially housed inside the capturing element. The first part and the second part of the electrical power generator are preferably completely housed within the capturing element. It has been found that there can be many advantages involved with placing the electrical power generator at least partially within the capturing element. One of these advantages is that it provides for a compact arrangement of the energy conversion means. In order to maximise energy capture while minimizing material costs and weight, the capturing element is advantageously a substantially hollow part. Arranging the electrical power generator at least partially within the capturing element provides for a compact and elegant arrangement, for example, in the form of an elongated pole, without a potentially bulky generator for converting mechanical energy into electrical energy surrounding its base.

In some embodiments, the second end is at a distance H (corresponding to the length of the capturing element) from the first end, such as at a height H above the first end, and the electrical power generator is placed at a distance of more than 0.05H from the first end, preferably at a distance of more than 0.1H from the first end, even more preferably at a distance of more than 0.2H, such as at a distance of more than 0.3H or more than 0.4H, from the first end, and optionally at a distance of at least 0.1H below or from the second end, such as at a distance of more than 0.2H, more than 0.3H or more than 0.4H from the second end. For example, in some embodiments the electrical power generator is placed at a distance of more than 0.1H above the first end and more than 0.1H below the second end, such as at a distance of more than 0.2H above the first end and more than 0.2H below the second end, for example, towards the longitudinal centre portion of the capturing element, for example, at a distance of more than 0.3H above the first end and more than 0.3H below the second end. In other embodiments, the subsystem can be positioned close to the first end (such as in the bottom 10% or 20% of the longitudinal extension of the capturing element), and in other embodiments it can be placed at the second end or close to it (such as in the upper 10% or 20% of the longitudinal extension of the capturing element). It has been found that it can be preferred that the subsystem is placed within a range of between 0.25H and 0.5H from the first end, to provide for an appropriate balance of amplitude of oscillation and lever effect while avoiding an interference between moving parts. Also, sometimes it can be preferred to have magnets and/or other relatively heavy components placed at a substantial distance from or below the second end, such as more than 0.3H or more than 0.5H from the second end.

In some embodiments, the first end is above the anchoring point. In other embodiments, the first end is below the anchoring point. In some embodiments, the capturing element and/or the electrical power generator is/are placed a distance above the anchoring point that corresponds to between 5% and 40%, such as between 10% and 30%, of the longitudinal extension of the capturing element, that is, of the distance between the first end and the second end of the capturing element.

Placing the electrical power generator at a substantial distance from the anchoring point and preferably also at a substantial distance from the first end of the capturing element (such as at a distance of 0.1H, 0.2H, 0.3H or 0.4H or more from the first end) may imply a substantial amplitude and maximum velocity of the oscillating movement where the subsystem is placed, which can provide for a correspondingly substantial amplitude and velocity of the relative movement between parts of the subsystem, such as between magnets and coils, thereby enhancing performance of the electrical power generator in terms of efficient energy conversion. In some embodiments, it is however preferred that the electrical power generator is placed at a certain distance from the second end of the capturing element, as the amplitude of the movement in correspondence with the second end can make it difficult or impossible to avoid collision between, for example, the inner walls of the capturing element and the electrical power generator, or between parts of the electrical power generator. This may especially be the case when the capturing element has a characteristic dimension such as a diameter that decreases towards the second end.

In some embodiments of the invention, the capturing element is configured to be attached to the anchoring point via an anchoring member arranged to be repetitively deformed by the oscillating movement of the capturing element. In some embodiments, the anchoring member extends into the capturing element and the second part of the electrical generator is mounted on a support which likewise extends into the capturing element. In some embodiments, the support extends into the capturing element to a position axially beyond the anchoring member.

The capturing element is, in many embodiments, relatively rigid and does not substantially deform during the oscillating movement. Thus, the capturing element can be designed and arranged so that the lift force acts on the capturing element, and the anchoring member is in some embodiments more flexible and/or more elastic than the capturing element and is arranged to connect the capturing element to the anchoring point, so that when the lift force acts on the capturing element, the capturing element will sway with regard to said anchoring point, for example, due to elastic deformation of the anchoring member. This arrangement can provide for a reduction of costs as a less costly material can be used for the capturing element than for the anchoring member, and the anchoring member can be designed to make sure that the displacement or swaying of the capturing element will be enough to produce electrical power via the electrical power generator, while being resistant enough to withstand the forces generated by the wind and by the swaying of the capturing element, for a long time including periods with high wind speeds. Regarding the capturing element, what is primarily important is often its shape and size, in combination with a sufficiently low weight and sufficient resistance to wear, including weather-induced wear. Thus, using two parts with different characteristics in what regards, for example, elasticity, can be an advantage and helpful to reduce costs. The anchoring member may be made of a different material or of different materials than the capturing element, or if made of the same materials, it may comprise them in proportions different from the proportions used for the capturing element. The capturing element is preferably made of a lightweight material and can be substantially hollow.

For example, the capturing element can preferably be made of, or at least comprise, lightweight materials such as, for example, carbon fibre, fibreglass, polyester resin, epoxy resin, basalt fibres, balsa wood, aluminium and/or titanium, etc. This capturing element may include internal reinforcing elements such as ribs, brackets or beams that provide structural rigidity. In some embodiments, the capturing element has a length of more than 10 cm, such as more than 0.5 m or more than 1 m, such as more than 2 m or 4 m or 10 m or 20 m or 50 m or 100 m or 150 m or 200 m. The anchoring member, such as a rod, can be made of any material suitable for providing an appropriate performance. Carbon fiber or metals such as titanium and steel are examples of suitable materials.

In the present application, the term "anchoring point" refers to the point with respect to which oscillation takes place, that is, the point of "fixed attachment". For example, if the device comprises the capturing element and an anchoring member and the capturing element is attached to a base via the anchoring member, the place of insertion of the anchoring member into a fixed and/or rigid structure can be considered as the anchoring point.

The term "anchoring member" should not be interpreted in a restrictive sense and should especially not be interpreted as necessarily referring to one single element; the elastic element can for example comprise several elements arranged in any suitable manner in relation to each other.

The term "elastic" refers to the elastic character of the element in the sense that after deformation by bending it tends to return to its original shape. The term "elastic" is not intended to imply any need for elastic character in terms of its performance after elongation.

A further aspect of the invention relates to a method of producing electrical power with a vortex based power generation device as described above. The method comprises the step of subjecting the capturing element to a moving fluid such that the capturing element is caused to oscillate due to von Karman vortices induced in the fluid by the capturing element.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 is a schematic elevational cross-sectional view of a vortex based wind power device according to an embodiment of the invention.

Figure 2 is a schematic elevational cross-sectional view of a portion of the vortex based wind power device shown in figure 1.

Figure 3A is a schematic top view of the generator forming part of the device.

Figure 3B is a perspective cross-sectional view of the generator.

Figures 4A-4C schematically illustrate how the magnetic field through the core of the generator varies during operation of the generator.

Figure 5 schematically illustrates how the repulsion force between the two parts of the generator varies during operation.

Figure 6 schematically illustrates the variation of the magnetic field through the coil of the generator during operation of the generator.

Figures 7A and 7B are schematic perspective views of a generator according to another embodiment of the invention, with parts cut away to better show the constitution of the generator.

Figure 8 is a schematic elevational cross-sectional view of a portion of a variant of the device shown in figures 1 and 2.

## DESCRIPTION OF A WAY OF CARRYING OUT THE INVENTION

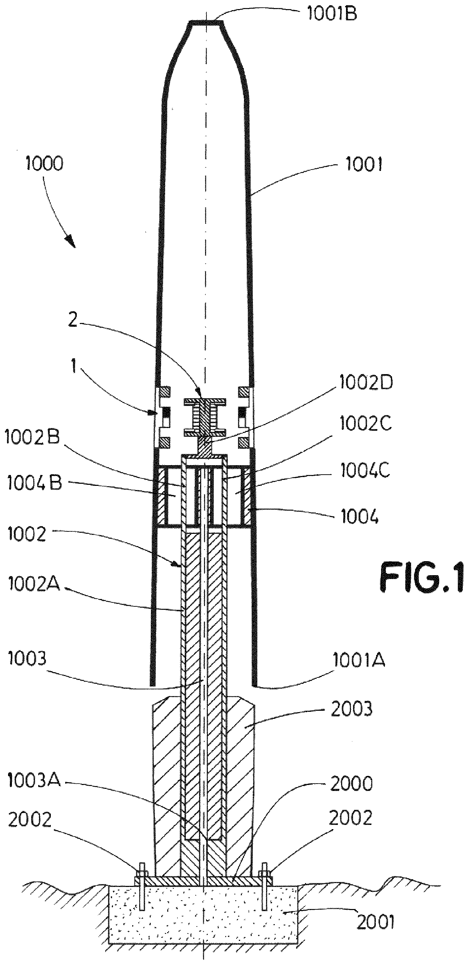

Figure 1 shows, schematically, a von Karman vortex based wind power device 1000 comprising a capturing element 1001 in the shape of vertically arranged pole or mast (that is, a pole or mast having a longitudinal axis arranged vertically) with a first end 1001A (the bottom end of the capturing element 1001 when arranged as shown in figure 1) and a second end 1001B (the top end of the capturing element 1001 when arranged as shown in figure 1). The height or length of the capturing element 1001 is the distance between its first end 1001A and its second end 1001B. In this embodiment, the capturing element 1 has a circular or substantially circular cross section, which is often advantageous in that it allows the generator to operate in the same way independently of the direction of the wind. The capturing element in the illustrated embodiment is shaped according to the principles discussed in WO-2018/149942-A1.

A first part 1 of an electrical power generator is mounted within the capturing element 1001 and is attached to the capturing element such that it moves with the capturing element, so that when the capturing element 1001 oscillates (for example, due to the von Karman vortices generated when the capturing element is placed in a fluid that is moving (in the case of a wind power device, when exposed to wind), so does the first part 1.

The wind power device further comprises a support 1002 for supporting a second part 2 of the generator within the capturing element. In the illustrated embodiment the support 1002 comprises a substantially cylindrical portion 1002A that terminates, at its upper end, in a plurality of vertically extending arms 1002B and 1002C which support a platform 1002D on which the second part 2 of the generator is mounted. Thus, the second part 2 of the generator is likewise arranged within the capturing element, but it is fixed by the support 1002 and it does not oscillate with the capturing element 1001. The second part 2 is arranged at substantially the same height as the first part 1, so that when the capturing element oscillates, the first part 1 will carry out an oscillating movement in relation to the second part 2. This oscillating movement causes the generator to produce electrical power and energy, in a manner that will be further explained below. Additionally, a magnetic repulsion force is generated between the first part 1 and the second part 2. This repulsion force can serve to prevent (or at least limit the risk of) an excessive amplitude of the oscillating movement of the capturing element 1001 (thereby preventing or reducing the risk of an undesired collision between moving and stationary parts of the device) and also to influence the natural frequency of oscillation of the capturing element 1001, which can serve to "tune" the device to the velocity of the fluid (such as the wind), in line with the principles discussed in WO-2016/055370-A2, WO-2017/174685-A1, and WO-2018/149942-A1.

The device further comprises an anchoring member 1003 on which the capturing element 1001 is mounted and by means of which it is anchored to an anchoring point (schematically illustrated at 1003A) in relation to which the capturing element can carry out a swaying movement. In the illustrated embodiment, the anchoring member 1003 is a rod or rod-like member extending in the axial (and vertical) direction within the support 1002. The anchoring member 1003 is anchored to a base portion of the support 1002. The device is mounted on a support plate 2000 which is attached to some kind of foundation 2001, for example, by bolts 2002. The support 1002 can be surrounded by member 2003 that extends in the axial direction between the support plate 2000 and a position close to the first end 1001A of the capturing element 1001, and which can serve to improve the appearance and/or the aerodynamic behaviour of the device, and/or serve to protect the device.

The anchoring member 1003 is elastic. The term "elastic" does not exclude the possibility of using a relatively rigid anchoring member 1003, but merely implies that the anchoring member should have enough capability of elastic deformation by bending/inclining sideways to allow the oscillating movement of the capturing element 1001 in relation to the anchoring point 1003A, that is, an oscillating movement according to which the capturing element 1001 is inclined first to one side and then to the other, etc. The term "elastic" does not imply that the anchoring member should be able to be stretched in the axial direction: the term "elastic" refers to the fact that the anchoring member can be bent sideways, that is, that its upper part can be displaced substantially in the radial direction due to bending forces exerted by the capturing element, and thereafter return to its original straight, axially extending shape, without suffering any substantial plastic deformation.

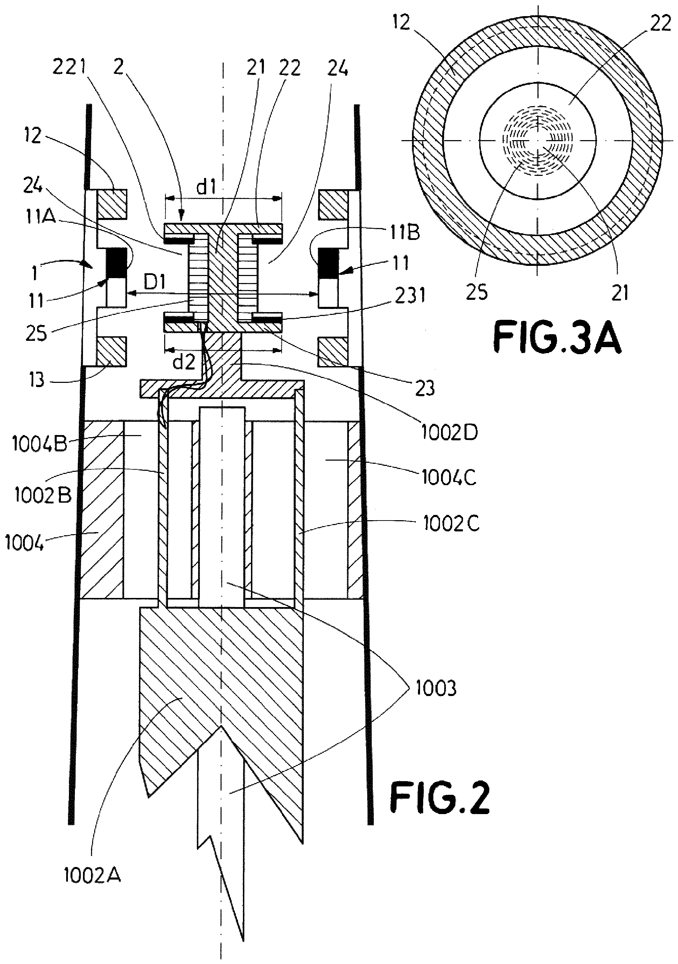

The capturing element 1001 is attached to the anchoring member 1003 by means of one or more interconnecting members 1004 (such as one or more disc-shaped members) which are arranged to attach the capturing element 1001 to anchoring member 1003 as schematically shown in figures 1 and 2. The interconnecting member or members 1004 include axially extending channels, openings or spaces 1004B, 1004C through which the arms 1002B and 1002C of the support 1002 can pass. The dimensions of these channels, openings or spaces and their position in relation to the arms are such that the capturing element 1001 and the interconnecting members 1004 can oscillate (at least to a sufficient extent to allow for effective use of the device for energy production) without any interference between the interconnecting members 1004 and the support 1002. Thus, the support 1002 extends axially beyond the anchoring member 1003 in the vertical (upwards) direction, so that the generator comprising the first part 1 and the second part 2 for converting the oscillatory movement of the capturing element into electrical power and also the equipment for tuning the natural frequency of oscillation can be placed above the anchoring member 1003, without any risk of interfering with it during oscillation.

Thus, and as explained in for example WO-2016/055370-A2, WO-2017/174685-A1, and WO-2018/149942-A1, when the laminar flow of the wind (or other fluid) impacts against the elongated pole-shaped capturing element 1001, it produces a series of vortices that occur alternately on one side and on the other side of the capturing element 1001 and with a constant distance between the successive vortices on each side of the capturing element 1001. Therefore, a substantially constant drag force in the direction of the wind and a lift force substantially perpendicular to the general direction of the wind and to the direction of the drag force are produced on the capturing element 1001. This lift force switches sign periodically, with a frequency that corresponds to the onset of the vortices, and this force causes the oscillation (that is, the swaying) of the capturing element 1001, towards one side and towards the other side. As the capturing element 1001 has a substantially circular cross section, the oscillation can occur in substantially the same way irrespective of the direction in which the wind blows; the oscillation will take place in a plane perpendicular to the direction of the wind. The oscillation will cause the first part 1 of the generator to move in relation to the second part 2.

As schematically illustrated in figure 1, the generator comprising the first part 1 and the second part 2 is placed within the capturing element, that is, above the first end thereof but also distanced from the second end thereof. More specifically, it is placed at a position where the internal diameter is relatively large and the amplitude of the oscillation is not so big so as to cause physical interference between the moving parts associated to the capturing element and the parts placed on the support 1002. Thus, a balance may be found between the need for space to accommodate the generator, the desire the place the generator and the tuning magnets at a substantial distance from the base so as to take advantage of the "lever effect", and the desire for a substantial amplitude of oscillation to enhance energy production.

As shown in figure 2, in the illustrated embodiment and with the capturing element in its neutral position (that is, with the axis extending in the vertical direction) the first part 1 (attached to the capturing element 1001) is radially spaced from the second part and surrounds the second part. The first part 1 comprises a substantially annular magnet 11 comprising a north pole end (for example, the upper end in figure 2) and a south pole end (for example, the lower end in figure 2) arranged opposite each other in an axial direction. The axial direction is the direction perpendicular to the radii of the annular magnet 11. In figure 2, the radii extend in horizontal directions, thus, the axial direction is the vertical direction, the direction parallel with the central axis of the annular magnet.

The second part 2 comprises a core of ferromagnetic material (such as so-called electric steel, ferrite, etc.) placed radially inside the substantially annular magnet 11. In some embodiments the core is not laminated, and in other embodiments the core is fully or partly laminated, as known in the art for the purpose of reducing losses due to eddy currents. The core comprises a central portion 21 extending in the axial direction, a first radially extending portion 22 and a second radially extending portion 23, the radially extending portions 22, 23 extending radially from the central portion 21 at two different axial positions, so that the radially extending portions 22, 23 are spaced from each other by a gap 24 extending in the axial direction and surrounding the central portion 21. The second part 2 further comprises a coil 25 wound around the central portion 21 between the radially extending portions 22, 23. Figure 3A schematically illustrates how the coil 25 is wound around the central portion 21 of the core, under the radially extending portion 22.

As shown in figure 2, the first part 1 is arranged displaceable in a substantially radial direction perpendicular to the axial direction, so that when subjected to a repetitive oscillatory movement in the radial direction due to the movement of the capturing element, during one cycle of the oscillatory movement:

- at one moment of the cycle, a first segment 11A of the first annular magnet 11 will enter the gap 24 whereas a second segment 11B of the first annular magnet 11 will be displaced away from the gap 24, the second segment 11B being positioned diametrically opposite the first segment 11A, and
- at another moment of the cycle, the second segment 11B will enter the gap, whereas the first segment 11A will be displaced away from the gap.

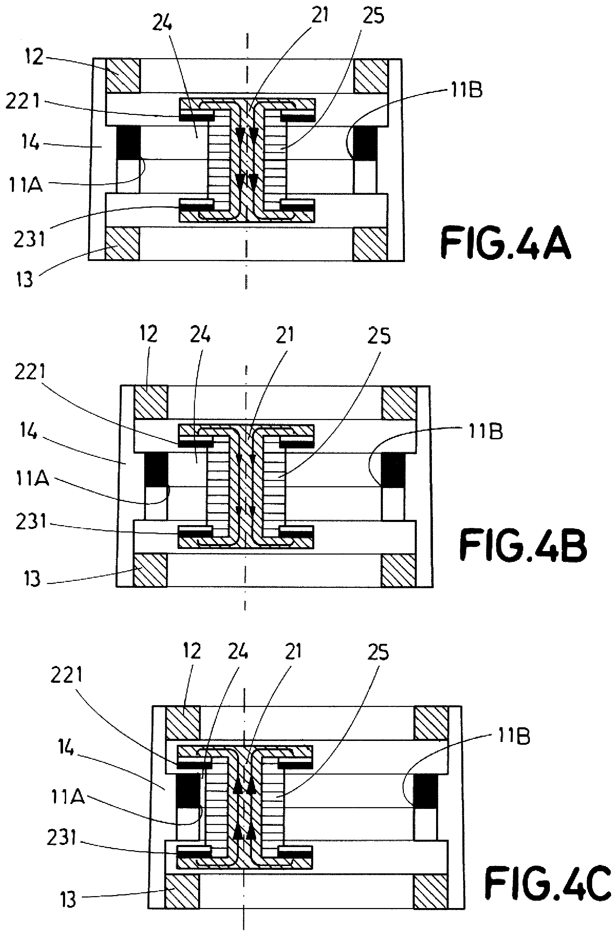

Figures 4A-4C schematically illustrate a part of this cycle, namely, how the first annular magnet 11 is displaced from a neutral position (shown in figure 4A) which it occupies when the capturing element 1001 is oriented completely vertically, so that the first segment 11A approaches the gap 24 whereas the diametrically opposite segment moves away from the gap (figure 4B), until the first segment 11A enters the gap 24 (figure 4C).

When a segment of the annular magnet 11 approaches and maybe even physically enters the gap 24 (as does segment 11A in figures 4B and 4C), the magnetic flux between the poles of that segment will follow a path comprising the parts of the radially extending portions 22, 23 adjacent to the segment -that is, basically "above" and "below" it- and the parts placed radially inwards therefrom, and the central portion 21. The magnetic flux through the coil or coils wound around the central portion will vary as the segments of the magnet approach the gap and move away from the gap. Basically, during one cycle the flux through the coil will reach two maxima and two minima, that is, the frequency of the change of the flux will be twice the frequency of the oscillatory movement, which favours the generation of power. As can be readily understood, the use of a basically annular layout of the magnet is advantageous in that it is symmetric with regard to the core, so that the operation and efficiency can be substantially the same irrespective of the orientation of the plane (passing through the axis of symmetry) in which the oscillatory movement is taking place, that is, in the case of a wind power generator, irrespective of the direction in which the wind blows.

As schematically illustrated in figure 2, the first annular magnet 11 has a first internal diameter D1, the first radially extending portion 22 has a first external diameter d1, and the second radially extending portion 23 has a second external diameter d2, D1 being larger than d1 and also larger than d2. The difference in diameters implies that the first annular magnet can occupy a neutral position in which it is positioned radially beyond (that is, outwards from) the radially extending portions of the core, thereby minimizing the interaction between the core and the magnetic flux from the magnet. In the illustrated embodiment, d2>d1; the diameters have been selected accordingly to adapt the generator to the fact that the movement of the first part is not purely radial: rather, the movement is pendular, and thus features an amplitude that depends on the distance to the centerpoint of the movement: the upper part of the first part moves with a greater amplitude than the lower part of the first part.

As shown in figures 2 and 4A-4C, a second substantially annular magnet 221 is arranged on the first radially extending portion 22 and a third substantially annular magnet 231 is arranged on the second radially extending portion 23. The second and third annular magnets generate a magnetic field through the central portion of the core that has a direction that is opposite to the direction of the magnetic field through the core that is generated by the first annular magnet 11 when the first annular magnet 11 approaches and enters the gap 24. This is schematically illustrated in figures 4A-4C, where figure 4A schematically illustrates the magnetic field through the core when the first annular magnet is in its neutral position, spaced from the gap in correspondence with the entire circumference of the gap. That is, in this position where the influence of the first magnet on the magnetic field through the central portion of the core is at its minimum, the magnitude and direction of the magnetic field through the central portion of the core and thus through the coil can be as schematically illustrated in figure 4A. The magnetic field within the central portion of the core is basically due to the second magnet 221 and the third magnet 231.

Now, when the first annular magnet 11 approaches the gap (on one side of the core), it has an increasing influence on the magnetic flux through the core, which is schematically illustrated as a reduction of the magnitude of the magnetic field through the core in figure 4B, followed by a change of polarity of the magnetic field and an increase in magnitude in figure 4C. As explained above, this can serve to enhance the total magnitude of change of the magnetic flux through the coil during each cycle without increasing the dimensions of the core, for a given design and material of the core. As schematically illustrated in figures 4A-4C, the core can be pre-loaded or magnetically biased so that a larger change in the flux can be produced by the first annular magnet when entering and exiting the gap, prior to any magnetic saturation of the core. Also, as can be readily understood from figures 4A-4C, the second 221 and third 231 annular magnets will generate a force on the first annular magnet 11 that will have a component directed radially outwards. This can help to create an automatic adaptation of the natural frequency of oscillation of the oscillating system to wind speed, and to reduce the risk of a collision between moving and stationary parts of the device due to an excessive amplitude of the oscillatory movement.

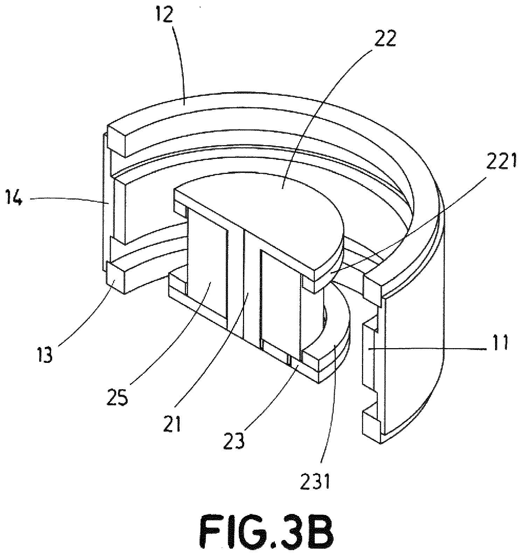

In the illustrated embodiment, the first part 1 of the electrical power generator further comprises a first annular member 12 and a second annular member 13 arranged on opposite sides of the first annular magnet 11 in the axial direction, that is, with the orientation shown in figure 2, substantially axially above and below the first annular magnet. The first and second annular members are of a ferromagnetic material. As shown in for example figures 2 and 4A-4C, the first annular member 12 is axially spaced from the first annular magnet 11 so that the first radially extending portion 22 of the core can enter a space between the first annular member 12 and the first annular magnet 11 when a corresponding segment of the first annular magnet 11 approaches the core. The second annular member 13 is axially spaced from the first annular magnet 11 so that the second radially extending portion 23 of the core can enter a space between the second annular member 13 and the first annular magnet 11 when a corresponding segment of the first annular magnet 11 approaches the core. Reference is made to, for example, figures 4A-4C. The relationship between the different parts discussed above can also be observed in figure 3B. In the illustrated embodiment, the first annular magnet 11, the first annular member 12 and the second annular member are arranged on a common (in the illustrated case, substantially ring-shaped) frame or support member 14.

It has been found that the use of these annular members 12 and 13 can be helpful to enhance the magnetic flux through the core and the change thereof during operation, for a given first annular magnet. It is believed that this may be due to the first 12 and second 13 annular members helping to guide and conduct the magnetic field originated by adjacent portions or segments of the first annular magnet 11 so as to guide it through the part of the core that is most proximate the first 12 and second 13 annular members. In this way, not only the segment of the first annular magnet 11 that actually is closest to the radially extending portions of the core, but also other portions - that is, angularly more remote portions- of the magnet 11 can contribute to the magnetic flux through the core, as the magnetic field created by those more remote portions can be guided towards the part of the core that is closest to the annular members 12 and 13, via those annular members. Thus, more efficient use of the magnetic material of the first annular magnet is achieved, in terms of amount of magnetic material vs. generated power for a given oscillating movement of the capturing element.

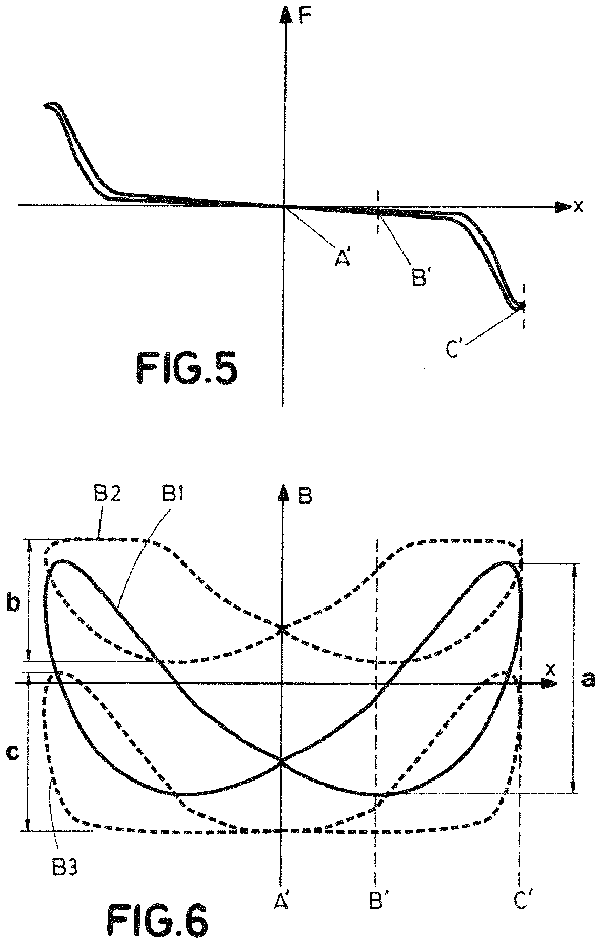

Figure 5 schematically illustrates the repulsion force F between the first annular magnet 11 and the second 221 and third 231 annular magnets depending on the position of the first part in terms of the distance x of displacement from its neutral position. In the neutral position A', the repulsion force is zero. When the first part is displaced from its neutral position to a position such as the one represented by figure 4B (position B' in figure 5), the repulsion force increases, and it raises rapidly towards a maximum value at a position C' corresponding to the amplitude of the movement. The same applies when the first part moves in the opposite direction from the neutral position. Thus, this repulsion force serves two purposes: it can help to prevent a collision between the first part and the second part (or a collision between other components of the system), and it can also serve to modify the natural frequency of oscillation of the capturing element, thereby improving the capacity of the device to tune in with the velocity of the fluid. The slight hysteresis that can be observed in figure 5 may be due to the extraction of electrical energy and magnetic hysteresis, which has a dampening effect on the generator.

Figure 6 shows how the magnetic field B through the coil 25 varies when the first part is displaced from its neutral position A' (as per figure 4A), through an intermediate position B' (for example, as per figure 4B) to its end position C' corresponding to the amplitude of the oscillating movement (as in figure 4C). This figure may be helpful to understand the importance of a correct dimensioning of the generator, including the selection and the arrangement of the first, second and third annular magnets, so as to optimize the respective magnetic fields so as to maximize the amplitude of the variation of the magnetic field through the core by preventing or minimizing the saturation of the ferromagnetic material of the core. Thus, an arrangement as per curve B1 (which does not produce any saturation of the ferromagnetic material) allows for an amplitude "a" which is larger than the amplitude "b" of curve B2 and the amplitude "c" of curve B3, which both are smaller than "a" due to the saturation of the ferromagnetic material of the core.

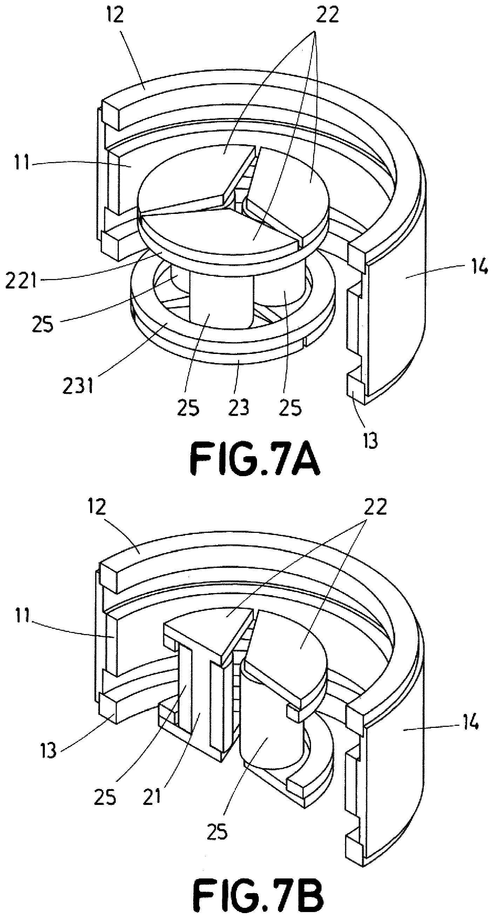

Figures 7A and 7B illustrate another embodiment in which there are three central portions 21, each with its own coil 25 wound around it. The radially extending portions 22 and 23 are configured substantially by the combination of segments of a circle which are combined to generate substantially disc-shaped radially extending portions. In this embodiment, the first part is as described above.

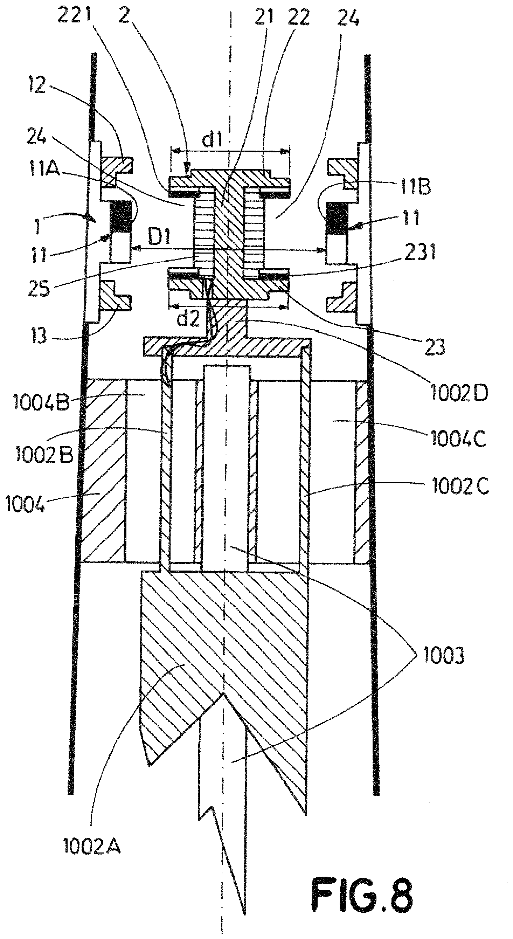

Figure 8 schematically illustrates a variant of the embodiment of figure 2, wherein the radially extending portions 22 and 23 as well as the first 12 and second 13 annular members, instead of the rectangular cross sections shown in figure 2, have stepped cross sections, that is, stepped surfaces, so that the stepped surface of the first radially extending portion 22 faces and substantially matches the stepped surface of the first annular member 12, and the stepped surface of the second radially extending portion 23 faces and substantially matches the stepped surface of the second annular member 13. This can serve to further enhance the magnetic coupling between the radially extending portions and the annular members and thus to enhance the magnetic flux through the core and the change thereof during operation, for a given first annular magnet. Thus, even more efficient use is made of the material of the generator, including the magnetic material. Of course, this has to be balanced against the more complex design of the components.

In this text, the term "magnet" generally refers to a permanent magnet.

In this text, and as explained above, the term "annular" when applied to magnets does not require that the magnet in question be a completely "annular" magnet made up of one single annular element. Rather, the term "annular" refers to the general configuration of the magnet, but not to its constitution. That is, an "annular magnet" in the context of the present document can be made up of a plurality of individual magnets, substantially arranged in a circle or forming a polygon having a large number of sides (such as more than for example 6, 8, 10, 15 or 20 sides), or similar, with or without space between the individual magnets. The space can be substantial, as long as it does not deprive the set of magnets in question from forming a generally circular configuration. The person skilled in the art will use components considering aspects such as cost of the components and cost of their installation. The same applies to references to a magnet shaped as a "ring". The same applies to the annular members of ferromagnetic material referred to herein.

In this text, terms as "above", "below", "vertical", "horizontal", etc., generally refer to a situation in which the elongated capturing element is arranged with its first end below its second end, that is, generally, with a longitudinal axis of the capturing element extending vertically. However, this should not be interpreted to imply that the capturing element must always be arranged in this way. In some implementations, other orientations of the capturing element are possible.

In this text, the term "comprises" and its derivations (such as "comprising", etc.) should not be understood in an excluding sense, that is, these terms should not be interpreted as excluding the possibility that what is described and defined may include further elements, steps, etc.

In this text, and unless otherwise indicated, the expression *"magnetic field"* refers to the magnetic flux density measured in Tesla (T), that is, the magnetic field that is typically labelled "B".

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An electrical power generator comprising a first part (1) arranged for reciprocating movement in relation to a second part (2), wherein:

the first part (1) comprises at least one first annular magnet (11), the magnet comprising a north pole end and a south pole end arranged opposite each other in an axial direction;
the second part (2) comprises a core of ferromagnetic material positioned radially inside the first annular magnet (11), the core comprising a central portion (21) extending in the axial direction, a first radially extending portion (22) and a second radially extending portion (23), the radially extending portions (22, 23) extending radially from the central portion (21) at two different axial positions, so that the radially extending portions (22, 23) are spaced from each other by a gap (24) extending in the axial direction and surrounding the central portion (21);
the second part further comprises at least one coil (25) wound around the central portion (21) between the radially extending portions (22, 23);
the first part (2) being arranged displaceable in a radial direction perpendicular to the axial direction, so that when subjected to a repetitive oscillatory movement in the radial direction, during one cycle of the oscillatory movement:

   - at one moment of the cycle, a first segment (11A) of the first annular magnet (11) will enter the gap (24) whereas a second segment (11B) of the first annular magnet (11) will be displaced away from the gap (24), the second segment (11B) being positioned diametrically opposite the first segment (11A), and
   - at another moment of the cycle, the second segment (11B) will enter the gap, whereas the first segment will be displaced away from the gap.

**2.** The electrical power generator according to claim 1, wherein a second annular magnet (221) is arranged on the first radially extending portion (22) and wherein a third annular magnet (231) is arranged on the second radially extending portion (23), the second and third annular magnets generating a magnetic field through the central portion of the core that has a direction that is opposite to the direction of the magnetic field through the core that is generated by the first annular magnet (11) when the first annular magnet (11) enters the gap (24).

**3.** The electrical power generator according to any one of the preceding claims, wherein the first part (1) further comprises a first annular member (12) and a second annular member (13) arranged on opposite sides of the first annular magnet (11) in the axial direction, the first annular member (12) and the second annular member (13) being of ferromagnetic material, the first annular member (12) being axially spaced from the first annular magnet (11) so that the first radially extending portion (22) of the core can enter a space between the first annular member (12) and the first annular magnet (11) when a corresponding segment of the first annular magnet (11) approaches the core, the second annular member (13) being axially spaced from the first annular magnet (11) so that the second radially extending portion (23) of the core can enter a space between the second annular member (13) and the first annular magnet (11) when a corresponding segment of the first annular magnet (11) approaches the core.

**4.** The electrical power generator according to any one of the preceding claims, wherein the first annular magnet (11) has a first internal diameter (D1), wherein the first radially extending portion (22) has a first external diameter (d1), and wherein the second radially extending portion has a second external diameter (d2), the first internal diameter (D1) being larger than the first external diameter (d1) and the second external diameter (d2).

**5.** The electrical power generator according to claim 4, wherein the second external diameter (d2) is larger than the first external diameter (d1).

**6.** The electrical power generator according to any one of the preceding claims, wherein the first radially extending portion (22) and the second radially extending portion (23) are substantially disc-shaped, optionally with a substantially circular perimeter.

**7.** The electrical power generator according to any one of the preceding claims, wherein the central portion (21) has a substantially cylindrical shape.

**8.** The electrical power generator according to any one of the preceding claims, comprising a plurality of central portions (21) of ferromagnetic material, each central portion being surrounded by a respective coil, the central portions (21) being arranged in parallel.

**9.** A vortex based power generation device, comprising:

   a capturing element (1001) having an elongated shape, the capturing element extending in a longitudinal direction between a first end (1001A) of the capturing element and a second end (1001B) of the capturing element,
   the capturing element (1) being configured to be attached to an anchoring point (1003A) and submerged in a fluid with the first end (1001A) closer to the anchoring point (1003A) than the second end (1001B), the capturing element being configured such that, when the fluid moves, the capturing element (1001) generates vortices in the fluid so that an oscillating lift force is generated on the capturing element (1001), which produces an oscillating movement of the capturing element (1001); and
   an electrical power generator according to any one of claims 1-8,
   wherein the electrical power generator is arranged in relation to the capturing element (1001) so that an oscillating movement of the capturing element (1001) causes an oscillating movement of the first part (1) of the electrical power generator in relation to the second part (2) of the electrical power generator, so as to produce electrical energy.

**10.** The vortex based power generation device according to claim 9, wherein one of the first part (1) and the second part (2) of the electrical power generator is attached to the capturing element (1001), and the other one of the first part (1) and the second part (2) is arranged on a support (1002) within the capturing element (1001).

**11.** The vortex based power generation device according to claim 9 or 10, wherein the capturing element (1001) has a substantially circular cross section, or a cross section with a shape substantially as a regular polygon, with or without rounded vertices.

**12.** The vortex based power generation device according to any one of claims 9-11, wherein the capturing element (1001) is at least partially hollow, and wherein the electrical power generator is at least partially housed inside the capturing element (1001), and wherein the first part (1) and the second part (2) of the electrical power generator are preferably completely housed within the capturing element (1001).

**13.** The vortex based power generation device according to any one of claims 9-12, wherein the capturing element (1001) is configured to be attached to the anchoring point (1003A) via an anchoring member (1003) arranged to be repetitively deformed by the oscillating movement of the capturing element (1001).

**14.** The vortex based power generation device according to claim 13, wherein the anchoring member (1003) extends into the capturing element (1001) and wherein the second part (2) of the electrical generator is mounted on a support (1002) which likewise extends into the capturing element (1001), wherein the support (1002) extends into the capturing element (1001) to a position axially beyond the anchoring member (1003).

**15.** A method of producing electrical power with a vortex based power generation device according to any one of claims 9-14, comprising the step of subjecting the capturing element (1001) to a moving fluid such that the capturing element is caused to oscillate due to von Karman vortices induced in the fluid by the capturing element (1001).

**Patentansprüche**

**1.** Stromgenerator, der einen ersten Teil (1) umfasst, der für eine hin- und hergehende Bewegung in Bezug auf einen zweiten Teil (2) angeordnet ist, wobei:

der erste Teil (1) wenigstens einen ersten ringförmigen Magneten (11) umfasst, wobei der Magnet ein Nordpolende und ein Südpolende aufweist, die in einer axialen Richtung einander gegenüberliegend angeordnet sind; der zweite Teil (2) einen Kern aus ferromagnetischem Material umfasst, der radial innerhalb des ersten ringförmigen Magneten (11) positioniert ist, wobei der Kern einen zentralen Abschnitt (21), der sich in der axialen Richtung erstreckt, einen ersten Abschnitt (22), der sich radial erstreckt, und einen zweiten Abschnitt (23), der sich radial erstreckt, umfasst, wobei sich die sich radial erstreckenden Abschnitte (22, 23) radial vom zentralen Abschnitt (21) an zwei unterschiedlichen axialen Positionen erstrecken, so dass die sich radial erstreckenden Abschnitte (22, 23) durch einen Spalt (24), der sich in axialer Richtung erstreckt und den zentralen Abschnitt (21) umgibt, zueinander beabstandet sind; der zweite Teil ferner wenigstens eine Spule (25), umfasst, die zwischen den radial verlaufenden Abschnitten (22, 23) um den zentralen Abschnitt (21) gewickelt ist; wobei das erste Teil (2) in einer radialen Richtung senkrecht zur axialen Richtung verschiebbar angeordnet ist, so dass bei wiederholter Schwingungsbewegung in radialer Richtung während eines Zyklus der Schwingungsbewegung:

- zu einem Zeitpunkt des Zyklus ein erstes Segment (11A) des ersten ringförmigen Magneten (11) in den Spalt (24) eindringt, während ein zweites Segment (11B) des ersten ringförmigen Magneten (11) aus dem Spalt (24) verschoben wird, wobei das zweite Segment (11B) diametral gegenüber dem ersten Segment (11A) positioniert wird, und
- zu einem anderen Zeitpunkt des Zyklus das zweite Segment (11B) in den Spalt eintritt, während das erste Segment aus dem Spalt heraus verschoben wird.

**2.** Elektrischer Stromgenerator nach Anspruch 1, wobei ein zweiter ringförmiger Magnet (221) auf dem ersten sich radial erstreckenden Abschnitt (22) angeordnet ist und wobei ein dritter ringförmiger Magnet (231) auf dem zweiten sich radial erstreckenden Abschnitt (23) angeordnet ist, wobei der zweite und der dritte ringförmige Magnet durch den zentralen Abschnitt des Kerns ein Magnetfeld erzeugen, dessen Richtung der Richtung des durch den Kern hindurch verlaufenden Magnetfelds, der vom ersten ringförmigen Magneten (11) erzeugt wird, wenn der erste Ringmagnet (11) in den Spalt (24) eintritt, entgegengesetzt ist.

**3.** Elektrischer Stromgenerator nach einem der vorhergehenden Ansprüche, wobei der erste Teil (1) ferner ein erstes ringförmiges Element (12) und ein zweites ringförmiges Element (13) umfasst, die auf gegenüberliegenden Seiten des ersten ringförmigen Magneten (11) in axialer Richtung angeordnet sind, wobei das erste ringförmige Element (12) und das zweite ringförmige Element (13) aus ferromagnetischem Material bestehen, wobei das erste ringförmige Element (12) axial vom ersten ringförmigen Magneten (11) beabstandet ist, so dass der erste sich radial erstreckende Abschnitt (22) des Kerns in einen Raum zwischen dem ersten ringförmigen Element (12) und dem ersten ringförmigen Magneten (11) eindringen kann, wenn sich ein entsprechendes Segment des ersten ringförmigen Magneten (11) dem Kern nähert, wobei das zweite ringförmige Element (13) axial vom ersten ringförmigen Magnet (11) beabstandet ist, so dass der zweite sich radial erstreckende Abschnitt (23) des Kerns in einen Raum zwischen dem zweiten ringförmigen Element (13) und dem ersten ringförmigen Magneten (11) eindringen kann, wenn sich ein entsprechendes Segment des ersten ringförmigen Magneten (11) dem Kern nähert.

4. Elektrischer Stromgenerator nach einem der vorhergehenden Ansprüche, wobei der erste ringförmige Magnet (11) einen ersten Innendurchmesser (D1) aufweist, wobei der erste sich radial erstreckende Abschnitt (22) einen ersten Außendurchmesser (d1) aufweist und wobei der zweite sich radial erstreckende Abschnitt einen zweiten Außendurchmesser (d2) aufweist, wobei der erste Innendurchmesser (D1) größer ist als der erste Außendurchmesser (d1)) und der zweite Außendurchmesser (d2).

5. Elektrischer Stromgenerator nach Anspruch 4, wobei der zweite Außendurchmesser (d2) größer ist als der erste Außendurchmesser (d1).

6. Elektrischer Stromgenerator nach einem der vorhergehenden Ansprüche, wobei der erste sich radial erstreckende Abschnitt (22) und der zweite sich radial erstreckende Abschnitt (23) im Wesentlichen scheibenförmig sind, wahlweise mit einem im Wesentlichen kreisförmigen Umfang.

7. Elektrischer Stromgenerator nach einem der vorhergehenden Ansprüche, wobei der zentrale Abschnitt (21) eine im Wesentlichen zylindrische Form aufweist.

8. Elektrischer Stromgenerator nach einem der vorhergehenden Ansprüche, umfassend eine Vielzahl zentraler Abschnitte (21) aus ferromagnetischem Material, wobei jeder zentrale Abschnitt von einer jeweiligen Spule umgeben ist und die zentralen Abschnitte (21) parallel angeordnet sind.

9. Vorrichtung zur Stromerzeugung auf Wirbelbasis, umfassend:

ein Erfassungselement (1001) mit einer länglichen Form, wobei sich das Erfassungselement in einer Längsrichtung zwischen einem ersten Ende (1001A) des Erfassungselements und einem zweiten Ende (1001B) des Erfassungselements erstreckt, wobei das Erfassungselement (1001) zur Befestigung an einem Verankerungspunkt (1003A) konfiguriert und in ein Fluid eingetaucht ist, wobei das erste Ende (1001A) näher am Verankerungspunkt (1003A) liegt als das zweite Ende (1001B), wobei das Erfassungselement so konfiguriert ist, dass bei Bewegung des Fluids das Erfassungselement (1001) Wirbel im Fluid erzeugt, so dass eine oszillierende Auftriebskraft auf das Erfassungselement (1001) erzeugt wird, die eine oszillierende Bewegung des Erfassungselements (1001) erzeugt; und einen Stromgenerator nach einem der Ansprüche 1-8, wobei der Stromgenerator in Bezug auf das Erfassungselement (1001) so angeordnet ist, dass eine oszillierende Bewegung des Erfassungselements (1001) eine oszillierende Bewegung des ersten Teils (1) des Stromgenerators in Bezug auf den zweiten Teil (2) des Stromgenerators verursacht, um so elektrische Energie zu erzeugen.

10. Vorrichtung zur Stromerzeugung auf Wirbelbasis nach Anspruch 9, wobei einer von dem ersten Teil (1) und von dem zweiten Teil (2) des Stromgenerators am Erfassungselement (1001) befestigt ist und der andere von dem ersten Teil (1) und von dem zweiten Teil (2) auf einem Träger (1002) innerhalb des Erfassungselements (1001) angeordnet ist.

11. Vorrichtung zur Stromerzeugung auf Wirbelbasis nach Anspruch 9 oder 10, wobei das Erfassungselement (1001) einen im Wesentlichen kreisförmigen Querschnitt oder einen Querschnitt mit einer Form im Wesentlichen wie ein regelmäßiges Polygon mit oder ohne abgerundeten Spitzen aufweist.

12. Vorrichtung zur Stromerzeugung auf Wirbelbasis nach einem der Ansprüche 9 bis 11, wobei das Erfassungselement (1001) wenigstens teilweise hohl ist und wobei der Stromgenerator wenigstens teilweise im Inneren des Erfassungselements (1001) untergebracht ist und wobei der erste Teil (1) und der zweite Teil (2) des Stromgenerators vorzugsweise vollständig innerhalb des Erfassungselements (1001) untergebracht sind.

13. Vorrichtung zur Stromerzeugung auf Wirbelbasis nach einem der Ansprüche 9 bis 12, wobei das Erfassungselement (1001) so konfiguriert ist, dass es über ein Ankerelement (1003), das wiederholt durch die oszillierende Bewegung des Erfassungselements (1001) verformbar ist, am Verankerungspunkt (1003A) befestigt werden kann.

**14.** Vorrichtung zur Stromerzeugung auf Wirbelbasis nach Anspruch 13, wobei sich das Verankerungselement (1003) in das Erfassungselement (1001) erstreckt und wobei der zweite Teil (2) des elektrischen Generators auf einem Träger (1002) montiert ist, der sich ebenfalls in das Erfassungselement (1001) erstreckt, wobei sich der Träger (1002) in das Erfassungselement (1001) bis zu einer Position axial über das Verankerungselement (1003) hinaus erstreckt.

**15.** Verfahren zur Erzeugung elektrischer Energie mit einer Vorrichtung zur Stromerzeugung auf Wirbelbasis nach einem der Ansprüche 9-14, umfassend den Schritt, das Erfassungselement (1001) einem sich bewegenden Fluid auszusetzen, so dass das Erfassungselement aufgrund von Von-Karman-Wirbeln, die durch das Erfassungselement (1001) in der Flüssigkeit induziert werden, in Schwingungen versetzt wird.

**Revendications**

**1.** Un générateur électrique comprenant une première partie (1) conçue pour un mouvement alternatif par rapport à une deuxième partie (2), dans lequel :

la première partie (1) comprend au moins un premier aimant annulaire (11), l'aimant comprenant une extrémité de pôle nord et une extrémité de pôle sud disposées à l'opposé l'une de l'autre dans une direction axiale ;
la deuxième partie (2) comprend un noyau de matériau ferromagnétique positionné radialement à l'intérieur du premier aimant annulaire (11), le noyau comprenant une partie centrale (21) s'étendant dans la direction axiale, une première partie s'étendant radialement (22) et une deuxième partie s'étendant radialement (23), les parties s'étendant radialement (22, 23) s'étendant radialement à partir de la partie centrale (21) à deux positions axiales différentes, de sorte que les parties s'étendant radialement (22, 23) sont espacées l'une de l'autre par un espace (24) s'étendant dans la direction axiale et entourant la partie centrale (21) ;
la deuxième partie comprend en outre au moins une bobine (25) enroulée autour de la partie centrale (21) entre les parties s'étendant radialement (22, 23) ;
la première partie (2) est conçue déplaçable dans une direction radiale perpendiculaire à la direction axiale, de sorte que, lorsqu'elle est soumise à un mouvement oscillatoire répétitif dans la direction radiale, au cours d'un cycle du mouvement oscillatoire :

- à un moment du cycle, un premier segment (11A) du premier aimant annulaire (11) pénètre dans l'espace (24) tandis qu'un deuxième segment (11B) du premier aimant annulaire (11) est écarté de l'espace (24), le deuxième segment (11B) étant positionné à l'opposé diamétralement du premier segment (11A), et
- à un autre moment du cycle, le deuxième segment (11B) pénètre dans l'espace, tandis que le premier segment est écarté de l'espace.

**2.** Le générateur électrique selon la revendication 1, dans lequel un deuxième aimant annulaire (221) est disposé sur la première partie s'étendant radialement (22) et dans lequel un troisième aimant annulaire (231) est disposé sur la deuxième partie s'étendant radialement (23), les deuxième et troisième aimants annulaires générant un champ magnétique à travers la partie centrale du noyau qui a une direction opposée à la direction du champ magnétique à travers le noyau qui est généré par le premier aimant annulaire (11) lorsque le premier aimant annulaire (11) pénètre dans l'espace (24).

**3.** Le générateur électrique selon l'une quelconque des revendications précédentes, dans lequel la première partie (1) comprend en outre un premier élément annulaire (12) et un deuxième élément annulaire (13) disposés sur des côtés opposés du premier aimant annulaire (11) dans la direction axiale, le premier élément annulaire (12) et le deuxième élément annulaire (13) étant en matériau ferromagnétique, le premier élément annulaire (12) étant espacé axialement du premier aimant annulaire (11) de sorte que la première partie du noyau s'étendant radialement (22) peut pénétrer dans un espace entre le premier élément annulaire (12) et le premier aimant annulaire (11) lorsqu'un segment correspondant du premier aimant annulaire (11) s'approche du noyau, le deuxième élément annulaire (13) étant espacé axialement du premier aimant annulaire (11) de sorte que la deuxième partie du noyau s'étendant radialement (23) peut pénétrer dans un espace entre le deuxième élément annulaire (13) et le premier aimant annulaire (11) lorsqu'un segment correspondant du premier aimant annulaire (11) s'approche du noyau.

**4.** Le générateur électrique selon l'une quelconque des revendications précédentes, dans lequel le premier aimant annulaire (11) a un premier diamètre interne (D1), dans lequel la première partie s'étendant radialement (22) a un premier diamètre externe (d1), et dans lequel la deuxième partie s'étendant radialement a un deuxième diamètre externe (d2), le premier diamètre interne (D1) étant plus grand que le premier diamètre externe (d1) et le deuxième diamètre externe (d2).

5. Le générateur électrique selon la revendication 4, dans lequel le deuxième diamètre externe (d2) est plus grand que le premier diamètre externe (d1).

6. Le générateur électrique selon l'une quelconque des revendications précédentes, dans lequel la première partie s'étendant radialement (22) et la deuxième partie s'étendant radialement (23) sont sensiblement en forme de disque, éventuellement avec un périmètre sensiblement circulaire.

7. Le générateur électrique selon l'une quelconque des revendications précédentes, dans lequel la partie centrale (21) a une forme sensiblement cylindrique.

8. Le générateur électrique selon l'une quelconque des revendications précédentes, comprenant une pluralité de parties centrales (21) en matériau ferromagnétique, chaque partie centrale étant entourée d'une bobine correspondante, les parties centrales (21) étant disposées en parallèle.

9. Un dispositif de production d'énergie sur la base de tourbillons, comprenant :

   un élément de capture (1001) de forme allongée, l'élément de capture s'étendant dans une direction longitudinale entre une première extrémité (1001A) de l'élément de capture et une deuxième extrémité (1001B) de l'élément de capture,
   l'élément de capture (1) étant configuré pour être fixé à un point d'ancrage (1003A) et être immergé dans un fluide, la première extrémité (1001A) étant plus proche du point d'ancrage (1003A) que la deuxième extrémité (1001B), l'élément de capture étant configuré de telle sorte que, lorsque le fluide se déplace, l'élément de capture (1001) génère des tourbillons dans le fluide de sorte qu'une force de levage oscillante est générée sur l'élément de capture (1001), ce qui produit un mouvement oscillant de l'élément de capture (1001) ; et
   un générateur électrique selon l'une des revendications 1 à 8,
   dans lequel le générateur électrique est disposé par rapport à l'élément de capture (1001) de sorte qu'un mouvement oscillant de l'élément de capture (1001) provoque un mouvement oscillant de la première partie (1) du générateur électrique par rapport à la deuxième partie (2) du générateur électrique, de manière à produire de l'énergie électrique.

10. Le dispositif de production d'énergie sur la base de tourbillons selon la revendication 9, dans lequel l'une de la première partie (1) et de la deuxième partie (2) du générateur électrique est fixée à l'élément de capture (1001), et l'autre de la première partie (1) et de la deuxième partie (2) est disposée sur un support (1002) à l'intérieur de l'élément de capture (1001).

11. Le dispositif de production d'énergie sur la base de tourbillons selon la revendication 9 ou 10, dans lequel l'élément de capture (1001) a une section transversale sensiblement circulaire, ou une section transversale ayant une forme sensiblement comme un polygone régulier, avec ou sans sommets arrondis.

12. Le dispositif de production d'énergie sur la base de tourbillons selon l'une quelconque des revendications 9 à 11, dans lequel l'élément de capture (1001) est au moins en partie creux, et dans lequel le générateur électrique est au moins en partie logé à l'intérieur de l'élément de capture (1001), et dans lequel la première partie (1) et la deuxième partie (2) du générateur électrique sont de préférence complètement logées à l'intérieur de l'élément de capture (1001).

13. Le dispositif de production d'énergie sur la base de tourbillons selon l'une quelconque des revendications 9 à 12, dans lequel l'élément de capture (1001) est configuré pour être fixé au point d'ancrage (1003A) par l'intermédiaire d'un élément d'ancrage (1003) conçu pour être déformé de manière répétitive par le mouvement oscillant de l'élément de capture (1001).

14. Le dispositif de production d'énergie sur la base de tourbillons selon la revendication 13, dans lequel l'élément d'ancrage (1003) s'étend dans l'élément de capture (1001), et dans lequel la deuxième partie (2) du générateur électrique est montée sur un support (1002) qui s'étend également dans l'élément de capture (1001), le support (1002) s'étendant dans l'élément de capture (1001) jusqu'à une position située axialement au-delà de l'élément d'ancrage (1003).

15. Un procédé de production d'énergie électrique avec un dispositif de production d'énergie sur la base de tourbillons selon l'une des revendications 9 à 14, comprenant l'étape consistant à soumettre l'élément de capture (1001) à un fluide en mouvement de sorte que l'élément de capture est amené à osciller en raison des tourbillons de von Karman induits dans le fluide par l'élément de capture (1001).

FIG.1

FIG.3A

FIG.2

FIG.3B

FIG.4A

FIG.4B

FIG.4C

FIG.5

FIG.6

# FIG.7A

# FIG.7B

FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016055370 A2
- WO 2017174685 A1
- WO 2018149942 A1
- JP 2004176616 A